**Europäisches Patentamt**

**European Patent Office**

**Office européen des brevets**

(19)

(11) Veröffentlichungsnummer: **0 262 748**

**A2**

(12) # EUROPÄISCHE PATENTANMELDUNG

(21) Anmeldenummer: **87202005.2**

(22) Anmeldetag: **25.09.87**

(51) Int. Cl.⁴: **B29C 63/16** , B29C 51/16

(30) Priorität: **29.09.86 DE 3633097**
**09.03.87 DE 8703503 U**

(43) Veröffentlichungstag der Anmeldung:
**06.04.88 Patentblatt 88/14**

(84) Benannte Vertragsstaaten:
**ES**

(71) Anmelder: **Diekwisch, Rita**
**Im Grossen Siek 85**
**D-4900 Herford(DE)**

(72) Erfinder: **Diekwisch, Rita**
**Im Grossen Siek 85**
**D-4900 Herford(DE)**

(74) Vertreter: **Patentanwälte TER MEER - MÜLLER**
**- STEINMEISTER**
**Artur-Ladebeck-Strasse 51**
**D-4800 Bielefeld 1(DE)**

(54) **Verfahren und Vorrichtung zur Kunststoffbeschichtung von dreidimensionalen Körpern.**

(57) Bei einem Verfahren und einer Vorrichtung zur Durchführung dieses Verfahrens, zur Beschichtung eines dreidimensionalen Körpers mit einer Kunststoffolie mit Hilfe einer Druckkissenpresse, ist ein Tisch (10) vorgesehen, auf den der zu beschichtende Körper (20) aufgelegt wird. Bevor das Druckkissen (16) die Folie erwärmt und andrückt, wird die Folie in einen dem Umriß des Körpers mit Abstand folgenden Rahmen (22) eingespannt, der die Kunststoffolie beim Erwärmen und beim Andrücken an den Körper festhält, so daß die Folie gedehnt wird und sich auch im Bereich vorspringender Ecken des Körpers vollständig an diesen anpaßt.

Fig.1

# VERFAHREN UND VORRICHTUNG ZUR KUNSTSTOFFBESCHICHTUNG VON DREIDIMENSIONALEN KÖRPERN

Die Erfindung betrifft ein Verfahren zur Kunststoffbeschichtung von dreidimensionalen Körpern, bei dem eine Kunststofolie auf einen Körper aufgelegt und unter Erwärmung mit Hilfe eines Druckkissens angedrückt wird. Im übrigen betrifft die Erfindung eine Vorrichtung zur Durchführung dieses Verfahrens.

Anstelle einer anderweitigen Oberflächenbehandlung eines Körpers, beispielsweise eines Möbelteils, ist es vielfach einfacher, den Körper mit einer Kunststofolie zu beschichten. Dies gilt beispielsweise für Spanplatten in der Möbelindustrie zur Herstellung der einzelnen Bauteile, insbesondere Türen und Frontplatten von Schrankmöbeln. Spanplatten wurden zunächst insgesamt auf beiden Seiten mit Kunststoff beschichtet und anschließend zu einzelnen Möbelteilen zurechtgeschnitten, deren umlaufende Ränder dann mit Hilfe sogenannter Umleimer abgedeckt wurden. Bei plattenförmigen Möbelteilen mit ausreichend abgerundeten Ecken und Kanten besteht unter gewissen Voraussetzungen die Möglichkeit, mit einer zusammenhängenden Kunststofolie gleichzeitig etwa die Frontfläche und zwei einander gegenüberliegende Ränder zu beschichten, wie es beispielsweise in dem DE-GM 86 31 961 angegeben ist, in dem sich allerdings keine Hinweise auf das anzuwendende Beschichtungsverfahren befinden. Furniere werden in dieser Weise mit Hilfe von Druckkissenpressen, sogenannten Membranpressen, aufgebracht.

Es ist jedoch bisher nicht befriedigend gelungen, zugleich die gesamten umlaufenden Ränder einer Platte zusammen mit der einen Hauptfläche mit einer zusammenhängenden Kunststofolie zu beschichten. Dies beruht darauf, daß sich an den Ecken oder Krümmungen der Außenkontur ein Materialüberschuß in der Kunststofolie ergibt, der zu einer Faltenbildung und zugleich einem unzureichenden Anhaften der Kunststofolie führt. Eine gewisse Abhilfe kann durch Einschneiden der Kunststofolie in den Eckbereichen und überlappende Befestigung geschaffen werden, jedoch bleiben die Schnittlinien in der Regel in störender Weise sichtbar.

Beim Beschichten von Körpern mit Hilfe von Kunststoffolien ist neben der Verwendung eines geeigneten Klebstoffs eine Erwärmung der Kunststoffolien notwendig. Membranpressen ermöglichen eine derartige Erwärmung dadurch, daß in dem Druckraum hinter der Membran Wärmestrahler oder andere geeignete Heizeinrichtungen angeordnet sind, so daß die Folie beim Auftreffen der Membran durch die Membran hindurch erwärmt wird. Dies kann jedoch je nach Art der verwendeten Folie dazu führen, daß diese so stark an der Membran anhaftet, daß sie beim Anheben der Membran nach dem Beschichtungsvorgang von der Membran wieder mitgenommen wird. Dies führt naturgemäß zu erheblichen Betriebsverzögerungen und Kosten. Weitere Schwierigkeiten können sich in der Praxis dadurch ergeben, daß beim Auflegen der Membran auf die Kunststofolie Lufteinschlüsse entstehen, in deren Bereich die Membran nicht mit dem erforderlichen Druck auf die Kunststofolie einwirken kann.

Der Erfindung liegt die Aufgabe zugrunde, eine Vorrichtung der eingangs genannten Art zu - schaffen, die es gestattet, einen dreidimensionalen Körper, insbesondere einen plattenförmigen Körper in einem Arbeitsgang mit einer zusammenhängenden Kunststofolie auf einer Hauptfläche und dem gesamten umlaufenden Rand mit einer Kunststofolie ohne Faltenbildung in den Ecken in einer von Betriebsstörungen freien Art und Weise zu beschichten.

Diese Aufgabe wird erfindungsgemäß bei einem Verfahren der eingangs genannten Art dadurch gelöst, daß die Folie durch einen den Körper mit Abstand umgebenden Rahmen eingespannt wird und daß die Folie durch den Rahmen beim Andrücken mit dem Druckkissen gehalten wird.

Durch den Rahmen wir die Folie gespannt und leicht gedehnt. Eine verstärkte Dehnung findet im Bereich von Vorsprüngen am Umriß des Körpers statt, also etwa an den vier Ecken einer rechteckigen Platte, an denen es bei dem bekannten Verfahren zu einer Faltenbildung kam. Durch verstärkte Dehnung in diesen Bereichen wird überschüssiges Material abgezogen, und zugleich wird die Folie der Kontur des Körpers angepaßt.

Eine erfindungsgemäße Vorrichtung zur Durchführung dieses Verfahrens umfaßt einen Tisch zur Aufnahme eines zu beschichtenden Körpers und ein absenkbares Druckkissen zum Andrücken einer Kunststofolie an den Körper. Die Vorrichtung ist gekennzeichnet durch einen dem Umriß des Körpers mit Abstand folgenden, absenkbaren Rahmen zum Einspannen der Kunststofolie.

Bei einer weiteren Ausführungsform der Erfindung wird durch Auflegen des Rahmens auf die Folie und Andrücken gegen den Tisch die Folie auf dem gesamten Umfang des Körpers fest eingespannt. Beim anschließenden Erwärmen und Dehnen der Folie steht daher nur das auf dem Körper liegende und das diesen streifenförmig umgebende Folienmaterial innerhalb der Rahmenfläche zur Verfügung. Das Folienmaterial wird daher in erheblichem Maße gestreckt. Dies gilt vor allem für den Bereich von Ecken des Körpers, in denen wegen des gegenüber dem Seitenabstand größeren Diagonalabstandes zwischen Körper und Rahmen eine noch stärkere Dehnung stattfindet. Im Zuge dieser sehr starken Verformung paßt sich das Folienmaterial vollständig an die Ecken des Körpers an, ohne daß eine Faltenbildung entsteht.

Vorzugsweise sind ein unteres Rahmenteil, das dem Tisch zugeordnet ist und auf das die Folie aufgelegt wird, und ein deckungsgleiches oberes Rahmenteil vorgesehen, das auf die Folie gelangt und diese zusammen mit dem unteren Rahmenteil einspannt. Das untere Rahmenteil kann ständig auf dem Tisch verbleiben oder sogar integraler Bestandteil des Tisches sein.

Der Rahmen befindet sich vorzugsweise im Wirkbereich des Druckkissens. In diesem Falle sind keine zusätzlichen Maßnahmen zum Andrücken des Rahmens bzw. des oberen Rahmenteils gegen die Folie erforderlich. Vielmehr wird der Rahmen, der auf der Folie liegt, bereits bei Beginn des Andrückvorganges durch das Druckkissen erfaßt und fest nach unten gedrückt.

Bei Membranpressen mit verhältnismäßig großem Tisch ist es zweckmäßig, kleinere Körper in einer größeren Stückzahl in einem Arbeitsgang zu beschichten. Diese Körper werden daher rasterförmig auf dem Tisch angeordnet, und der Rahmen ist in entsprechender Weise rasterförmig ausgebildet, so daß er alle Körper in gleicher Weise umgibt.

Eine zusätzliche Verbesserung bei der Beschichtung von Spanplatten kann sich durch Absaugen der Platten ergeben. Spanplatten, insbesondere Holzstaub-Spanplatten, sogenannte MDF-Platten, sind stark luftdurchlässig und daher gut absaugbar. Bei der Kunststoffbeschichtung müssen an der Rückseite der Platten ohnehin Bohrungen vorgesehen sein, die die Kunstharzbeschichtung der Rückseite durchdringen und den Austritt von Luft bzw. Gasen ermöglichen, die sich durch Erwärmung der Platten, durch Klebstoffverdunstung und dergleichen beim Beschichten sammeln. An diese Bohrungen können Saugleitungen angeschlossen werden. Das Absaugen bewirkt, daß der Klebstoff tief in die Poren der Spanplatte hineingezogen wird und sich fest verankert. Im übrigen ergibt sich eine noch glattere Anlage der Folie.

Eine weitere Ausführungsform umfaßt einen den Körper umgebenden und dessen Umriß mit Abstand folgenden, auf die Kunststoffolie auflegbaren und diese gegen den Tisch andrückenden Rahmen, in dem Bohrungen zur Entlüftung und/oder Luftzufuhr vorgesehen sind.

Die Bohrungen in dem Rahmen ermöglichen es zunächst, daß die in dem sich bildenden Raum zwischen der Kunststoffolie, der Membran und dem Rahmen fangende Luft durch den Rahmen nach außen entweichen kann. Die Membran kann sich also auf der gesamten Fläche gegen die Kunststoffolie anlegen. Ferner können die Bohrungen auch nach Durchführung eines Beschichtungsvorganges zum Einleiten von Luft oder einem anderen Kühlgas verwendet werden, das einerseits die Folie kühlt und andererseits die Folie und die Membran auseinanderdrückt, so daß die Kunststoffolie von der Membran gelöst und nicht von dieser beim Anheben des Druckkissens abgezogen wird.

Die Entlüftung einerseits und das Einleiten eines Kühlgases andererseits können über gesonderte Bohrungen in dem Rahmen erfolgen. Es können aber auch ein und dieselben Bohrungen verwendet werden, die an ein Kanalsystem angeschlossen sind, das zwischen einer Verbindung zur Umgebung, ggf. auch mit einer Unterdruckquelle, und einer Verbindung mit einer Kühlgasquelle umschaltbar ist.

Der Rahmen ist vorzugsweise federnd unterhalb des Druckkissens aufgehängt, so daß er automatisch mit diesem abgesenkt und angehoben wird und beim Absenken vor dem Druckkissen auf die Kunststoffolie trifft und diese in Verbindung mit dem Tisch einspannt.

Im Interesse einer vollständigen Beschichtung der seitlichen Ränder bis zu ihrer unteren Kante ist auf dem Tisch vorzugsweise ein aufragendes Pult vorgesehen, auf das der zu beschichtende Körper aufgelegt wird, so daß die Kunststoffolie mit Hilfe der Membran bis über die untere Kante der seitlichen Ränder hinaus und bis gegen die Tischfläche herabgezogen wird. Der Umriß des Pults sollte gegenüber demjenigen des Körpers leicht zurückspringen. Auch dies verbessert das Anhaften der Folie an den unteren Kanten der seitlichen Ränder.

Zusätzlich zu dem bereits beschriebenen, auf die Kunststoffolie auflegbaren Rahmen kann ein im wesentlichen deckungsgleicher, auf den Tisch aufgelegter oder mit der Tischoberfläche verbundener Unterrahmen vorgesehen sein, durch den die Kunststoffolie im Zusammenwirken mit dem oberen Rahmen eingespannt wird. Durch den Unterrahmen wird zwischen dem Pult und dem Unterrahmen eine den gesamten Körper umgebende Vertiefung gebildet, in die die Kunststoffolie durch die Membran hineingedrückt wird. Dabei wird die Folie gedehnt, so daß sie sich glatt an die Form der seitlichen Ränder des Gegenstandes anpaßt. Bei geeigneter Höhe bewirkt der Unterrahmen zugleich, daß die Kunststoffolie bereits zu einem frühen Zeitpunkt zuverlässig zwischen Unterrahmen und Oberrahmen eingespannt werden kann, bevor die Membran auf die Kunststoffolie auftrifft. Wird die Membran anschließend mit Druck beaufschlagt, so drückt sie die Kunststoffolie vollständig in die Vertiefung zwischen dem Pult und dem Unterrahmen hinein. Dabei dehnt und verformt sich die durch die Membran erwärmte Kunststoffolie, so daß sie sich glatt an die Hauptfläche und die Ränder des zu beschichtenden Gegenstandes anlegen kann.

Bei den in der Praxis am häufigsten zu beschichtenden rechteckigen, plattenförmigen Körpern weist der Oberrahmen und ggf. auch der Unterrahmen die Form eines entsprechenden, jedoch größeren Rechtecks auf, das den Gegenstand rundum mit Abstand umgibt. Dies führt dazu, daß der Rahmen an den Ecken aufgrund des Diagonalmaßes einen größeren Abstand zu dem Gegenstand aufweist als an den Längs-und Querseiten. Auf diese Weise wird die Folie in den Ecken stärker gedehnt, so daß sie sich auch hier faltenfrei anlegen kann.

Auch der Unterrahmen kann ebenso wie der Oberrahmen mit quergerichteten Bohrungen versehen sein. Diese Bohrungen ermöglichen einerseits einen Luftaustritt, wenn die Kunststoffolie durch die Membran herabgedrückt wird. Auch in diesem Falle können die quergerichteten Bohrungen in ein Kanalsystem integriert sein, über das die gefangene Luft positiv abgesaugt wird, oder daß sogar die Erzeugung eines Vakuum in der zwischen dem oder den Rahmen und dem Pult liegenden Vertiefung ermöglicht, das die Absenkung der Folie unterstützt. Dieses Vakuum kann allerdings allenfalls unterstützende Wirkung haben. Als einzige Quelle zur Erzeugung des erforderlichen Anpreßdruckes, wie es etwa bei dem in der US-PS 3 149 018 beschriebenen Verfahren dargestellt ist, würde ein Vakuum allenfalls für einfache Anwendungsfälle, nicht dagegen für die hier angestrebte, hochwertige Beschichtung von Möbelteilen einschließlich der umlaufenden Ränder dieser Teile ausreichen. Membranpressen der hier angesprochenen Art bauen Anpreßdrücke in der Größenordnung von 5 bar auf, während die Anpreßdrücke bei der Vakuumbeschichtung zwangsläufig unter 1 bar liegen.

Der Tisch kann seinerseits beheizt sein, so daß insbesondere in der das Pult umgebenden Vertiefung Wärme aufsteigt, die die Folie in dem zu dehnenden Bereich zusätzlich erwärmt. Die Beheizung der Folie von unten ist auch möglich, wenn auf dem Tisch aus herstellungstechnischen Gründen eine verhältnismäßig dünne Metallplatte aufgelegt wird, die das Pult und ggf. den Unterrahmen trägt und ggf. abnehmbar oder seitlich verschiebbar ist, so daß die Platte seitlich außerhalb der Presse in gut zugänglicher Position mit den zu beschichtenden Gegenständen bestückt werden kann. Eine von dem Tisch abnehmbare Platte bietet andererseits die Möglichkeit, bei einem Wechsel der Form des zu beschichtenden Gegenstandes eine entsprechende Umrüstung vorzunehmen.

Im folgenden werden bevorzugte Ausführungsbeispiele der Erfindung anhand der beigefügten Zeichnung näher erläutert.

Fig. 1 ist eine schematische Ansicht einer erfindungsgemäßen Vorrichtung;

Fig. 2 zeigt eine Teildraufsicht zu Fig. 1;

Fig. 3 ist eine schematische Ansicht einer Membranpresse mit den erfindungsgemässen Vorrichtungsteilen;

Fig. 4 ist eine schematische perspektivische Draufsicht auf einen Tisch einer Membranpresse mit einer größeren Anzahl von zu beschichtenden Körpern in rasterförmiger Anordnung;

Fig. 5 ist ein senkrechter Teilschnitt durch eine erfindungsgemäß ausgestaltete Membranpresse in einer Stellung, die sich vor einem Beschichtungsvorgang ergibt;

Fig. 6 ist ein entsprechender Teilschnitt im Augenblick des Auftreffens der Membran auf die Kunststoffolie.

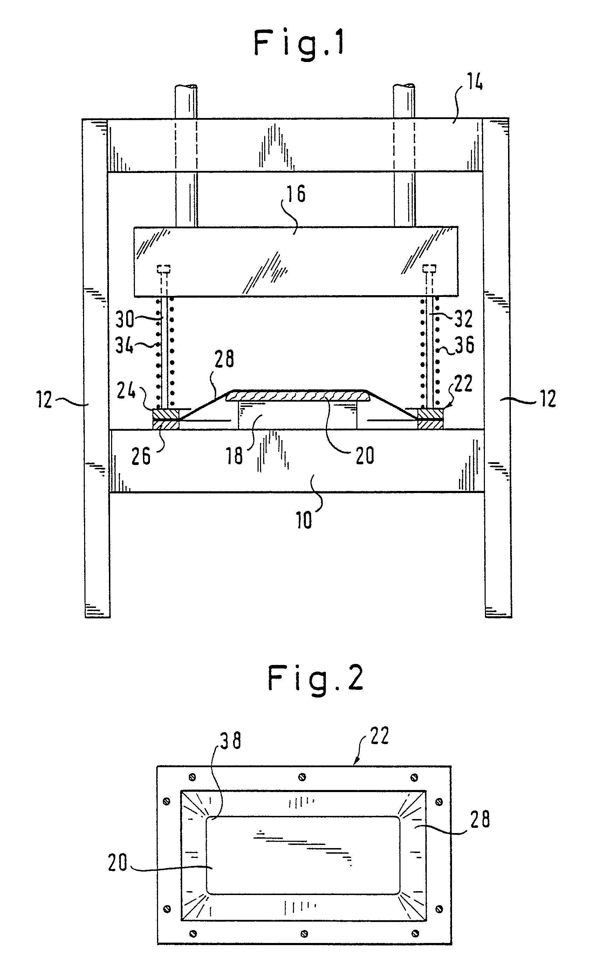

In Fig. 1 ist im Sinne eines zur Erläuterung dienenden Beispiels eine Vorrichtung gezeigt, die einen Tisch 10, Stützen 12 und ein Querhaupt 14 umfaßt. Unter dem Querhaupt 14 ist ein absenkbarer Oberstempel 16 aufgehängt, dessen nicht gezeigte untere Druckfläche in an sich bekannter Weise als aufblasbares Druckkissen ausgebildet ist.

Auf dem Tisch 10 befindet sich eine Halterung 18, auf der ein zu beschichtender Körper in der Form einer rechteckigen Türplatte 20 eines Küchenschrankes liegt.

Diese Türplatte 20 ist auch in Fig. 2 dargestellt. Die umlaufenden Kanten und Ecken der Türplatte sind abgerundet.

Ein Rahmen 22 umgibt die Türplatte 20 allseitig. Die Form und Große des Rahmens ist der Form und Größe der Türplatte angepaßt, und der Rahmen folgt der Außenkontur der Türplatte 22 mit im wesentlichen gleichbleibendem Abstand. Der Rahmen 22 besteht beispielsweise aus zwei deckungsgleichen Rahmenteilen 24,26, die auseinandergenommen werden können und zwischen denen eine Kunststoffolie 28 eingespannt werden kann. Zum Festhalten der Kunststoffolie 28 werden die Rahmenteile mit Hilfe von nicht gezeigten Spanneinrichtungen zusammengespannt.

Der Rahmen kann nach dem Einspannen der Folie und nach dem Erwärmen der Folie von Hand über die Türplatte 20 abgesenkt werden. Zweckmäßiger ist jedoch eine automatische Anhebung und Absenkung des Rahmens in Zuordnung zu der senkrechten Bewegung des Oberstempels 16. Im dargestellten Beispiel ist der Rahmen an Führungsstangen 30,32 aufgehängt, die senkrecht verschiebbar in dem Oberstempel 16 geführt sind. Druckfedern 34,36 spannen den Rahmen 22 nach unten in bezug auf den Oberstempel 16 vor, so daß der Rahmen 22 zwar in Abstand vor dem Oberstempel 16 abgesenkt wird, die Absenkbewegung des Oberstempels 16 nach dem Auftreffen des Rahmens 22 auf dem Tisch 10 jedoch fortgesetzt werden kann.

Beim Absenken des Rahmens 22 legt sich die Folie 28 zunächst glatt gegen die obere Oberfläche der Türplatte 20. Beim Auftreffen der von innen beheizten Membran auf die Folie wird diese erwärmt. Sie wird sodann durch die Membran weiter heruntergezogen, so daß sie sich den seitlichen Schnittflächen der Türplatte 20 nähert und dabei gedehnt und verformt wird. Dabei erfolgt eine verstärkte Dehnung in denjenigen Bereichen der Türplatte 20, die vom Umfang der Türplatte nach außen vorspringenden, wie etwa im Bereich der mit 38 bezeichneten Ecke gemäß Fig. 2. Durch die starke Dehnung der Kunststoffolie 28 in diesem Bereich wird überschüssiges Material abgezogen, und zugleich wird die Folie durch Verformung weitgehend der Form der Ecke angepaßt. Anschließend kann die Folie mit Hilfe des Druckkissens faltenfrei angedrückt werden.

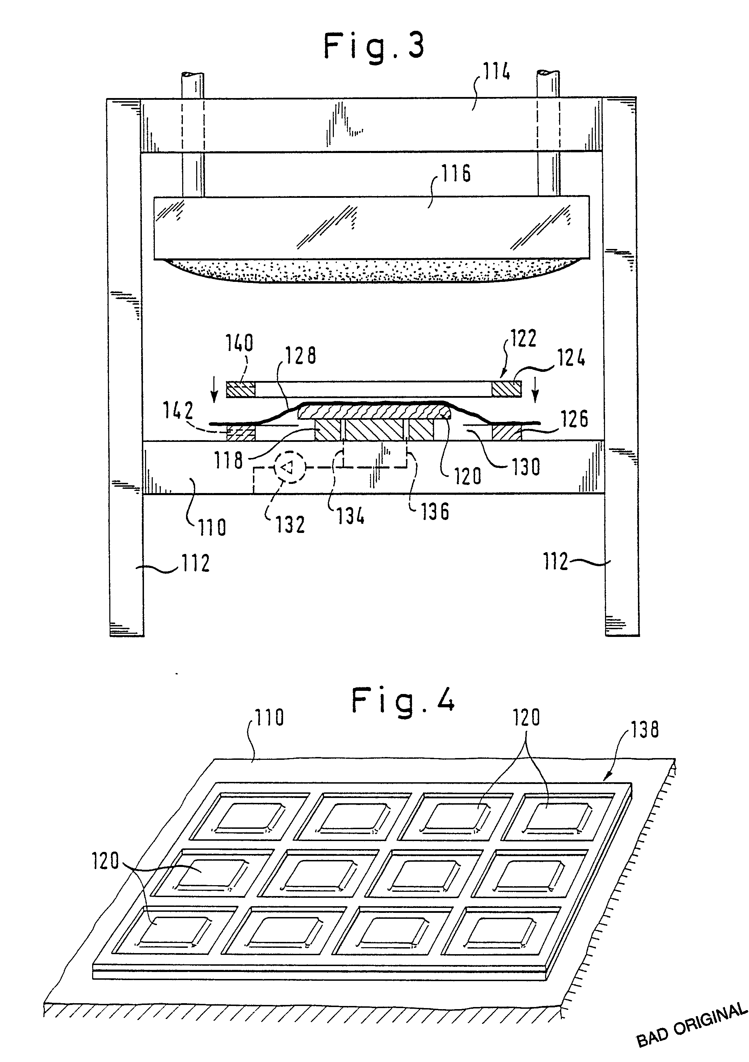

Eine Membranpresse gemäß Fig. 3 umfaßt einen Tisch 110 mit zwei Stützen 112 und einem Querhaupt 114. Unter dem Querhaupt ist ein absenkbarer Oberstempel 116 aufgehängt, an dessen Unterseite eine nicht bezeichnete Membran erkennbar ist. Diese Membran bildet ein Druckkissen zum Andrücken einer Folie gegen einen Körper, wie später erläutert werden wird. Oberhalb der Membran befinden sich im Oberstempel 116 Heizeinrichtungen, die die Membran und über diese die Folie beim Beschichtungsvorgang erwärmen.

Auf dem Tisch 110 befindet sich ein rechteckiges, plattenförmiges, gegenüber dem Tisch erhabenes Pult 118, auf dem eine Türplatte 120 als Beispiel für einen zu beschichtenden Körper liegt. Ein rechteckiger Rahmen 122 umgibt die Türplatte 120 allseitig mit gleichbleibendem Abstand.

Der Rahmen 122 besteht im dargestellten Beispiel aus zwei deckungsgleichen Rahmenteilen 124,126. Das untere Rahmenteil 126 liegt unmittelbar auf dem Tisch 110 und verbleibt dort ständig, kann also auch integraler Bestandteil des Tisches sein.

Auf die Türplatte 120 und das untere Rahmenteil 126 wird eine Kunststoffolie 128 aufgelegt. Sodann wird das obere Rahmenteil 124 in deckungsgleicher Position oberhalb des unteren Rahmenteils 126 auf die Kunststoffolie 128 gelegt.

Beim Absenken des Oberstempels erfaßt dessen Membran das obere Rahmenteil 124 und drückt dieses fest gegen das untere Rahmenteil 126, so daß die Folie eingespannt wird. Wenn die Kunststoffolie 128 ausreichend erwärmt ist, wird sie durch die Membran in den mit 130 bezeichneten Zwischenraum zwischen dem Pult 118 und dem Rahmen 122 gedrückt, bis sie diesen Zwischenraum vollständig ausfüllt. Dabei wird die Kunststoffolie 128 erheblich gedehnt und verformt, und sie legt sich faltenfrei um die gesamten Seitenflächen und insbesondere auch um die Ecken der Türplatte 120 herum. Anschließend werden der Oberstempel 116 und das obere Rahmenteil 124 angehoben, und die überstehende Folie wird von der beschichteten Türplatte 120 abgeschnitten.

Das Auflegen und Abheben des oberen Rahmenteils 124 kann von Hand erfolgen, kann jedoch auch in geeigneter Weise mechanisiert sein. Beispielsweise kann das obere Rahmenteil federnd unter dem Oberstempel 116 aufgehängt sein.

In Fig. 3 ist im übrigen eine Saugpumpe 132 mit zwei Saugleitungen 134,136 angedeutet. Die Saugleitungen 134,136 treten durch das Pult 118 hindurch in nicht bezeichnete Bohrungen in der Rückseite der Türplatte 120 ein. Auf diese Weise können Gase aus dem Inneren der Türplatte abgesaugt werden. Zugleich wird der auf die Türplatte 120 vor dem Auflegen der Folie aufzubringende Klebstoff tief in die Poren der Spanplatte hineingesaugt, und auch die Anlage der Folie kann durch Ansaugen zusätzlich verbessert werden, sofern dies erforderlich ist.

Fig. 4 ist eine schematische, perspektivische Ansicht eines Tisches mit einer Anzahl von rechteckigen Körpern 120, beispielsweise Türplatten. Die gezeigten zwölf Türplatten können in einem Arbeitsgang beschichtet werden. In diesem Fall ist ein rasterförmiger Rahmen 138 vorgesehen, der alle Türplatten in gleicher Weise umgibt.

Die Höhe des Pultes 118 und des unteren Rahmenteils 126 bzw. die Tiefe des zwischen beiden liegenden Zwischenraums 130 sind so gewählt, daß die Kunststoffolie, die vollständig bis zum Boden des Zwischenraums 130 herabgedrückt wird, ausreichend gedehnt und verformt werden kann.

Durch die Verwendung des Rahmens 122 kann der Fall eintreten, daß beim Auftreffen der Membran auf den Rahmen und beim anschließenden Formvorgang Luftpolster eingefangen werden. Luftpolster zwischen der Membran und der Kunststoffolie 128 können dazu führen, daß der Druck, den die Membran ausübt, nur unzureichend auf die Folie übertragen wird. Im übrigen ist es für den Formvorgang wesentlich, daß die durch den Tisch, das unteren Rahmenteil und die Folie eingeschlossene Luft entweichen kann. Aus diesen Gründen können in den beiden Rahmenteilen 124, 126 quergerichtete Bohrungen oder Nuten vorgesehen sein, die ein Entweichen der eingefangenen Luft gestatten. Diese Bohrungen oder Nuten sind in Fig. 3 gestrichelt angedeutet und mit 140,142 bezeichnet. Bei der Ausführungsform gemäß Fig. 4 können sich die genannten Bohrungen oder Nuten durch alle Stege erstrecken, so daß eine Entlüftung von innen nach außen möglich ist.

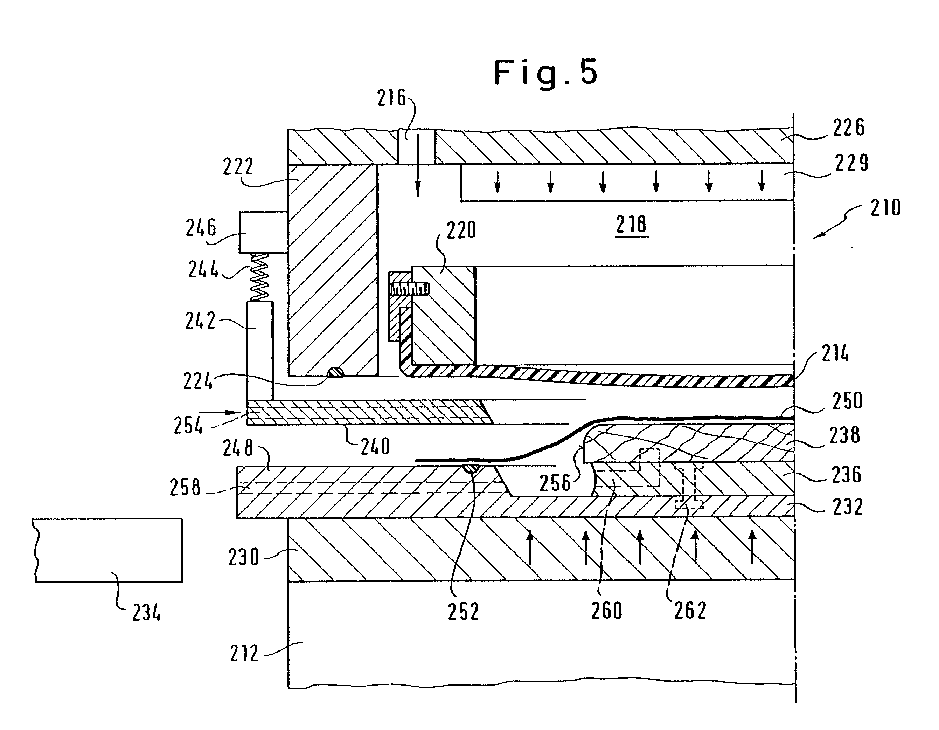

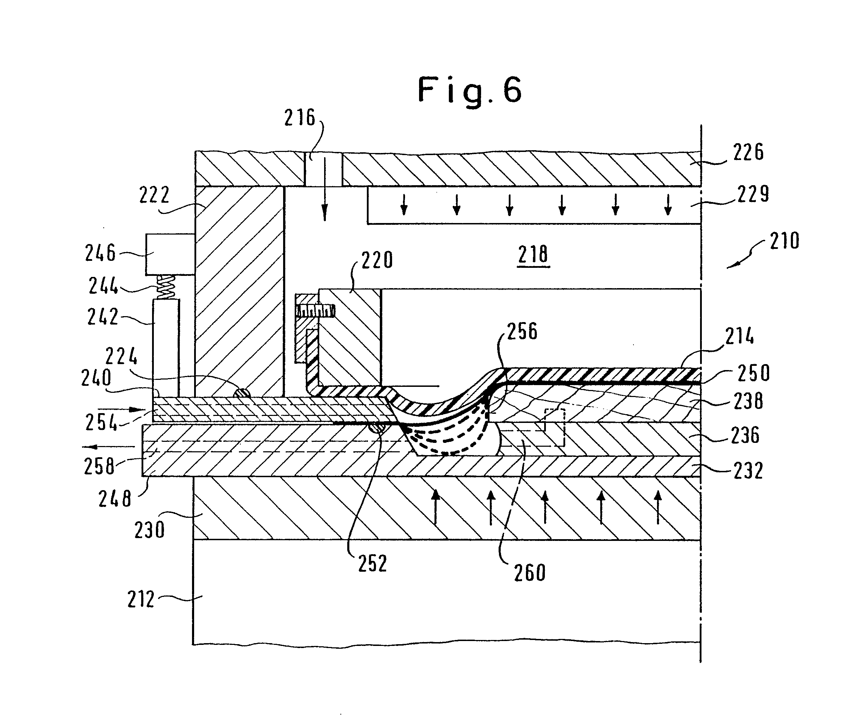

Die in Fig. 5 und 6 andeutungsweise gezeigte Membranpresse umfaßt ein insgesamt mit 210 bezeichnetes, an einem nicht dargestellten Gestell aufwärts und abwärts bewegliches Druckkissen und einen unterhalb des Druckkissens befindlichen Tisch 212. Das Druckkissen 210 wird im wesentlichen gebildet durch eine Membran 214 die eine mit Luftdruck über eine Öffnung 216 beaufschlagbare Druckkammer 218 nach unten abschließt. Die Membran 214 ist auf ihrem Umfang eingespannt in eine rahmenförmige Halterung 220 die in nicht gezeigter Weise innerhalb der Druckkammer 218 aufgehängt ist. Zu den Außenseiten hin wird die Druckkammer 218 durch einen Dichtrahmen 222 abgeschlossen, in deren unter Oberfläche eine Dichtleiste 224 eingelassen ist. Unterhalb der mit 226 bezeichneten oberen Deckplatte befinden sich nicht im einzelnen dargestellte Heizstrahler 229 die Wärme in Pfeilrichtung nach unten abgeben und die Menbran 214 erwärmen.

Der Tisch 212 ist in seinem oberen Bereich als Heizplatte 230 ausgebildet. Zu diesem Zweck sind beispielsweise nicht gezeigte Heizdrähte in den Tisch eingebettet, oder es sind Fluidkanäle für ein Heizfluid vorgesehen. Auf diese Weise wird Wärme nach oben in Richtung der nicht bezeichneten Pfeile abgegeben. Auf dem als Heizplatte ausgebildeten oberen Bereich des Tisches liegt eine verhältnismäßig dünne Platte 232 insbesondere aus Metall, die die eigentliche Tischfläche bildet. Die Verwendung einer nur lösbar mit dem Tisch verbundenen Platte hat den Vorteil, daß diese etwa beim Werkstückwechsel oder auch bei der Umrüstung auf ein anderes Werkstück abgenommen oder insbesondere seitlich auf einen angedeuteten angrenzenden Tisch 234 verschoben werden kann, damit die notwendigen Arbeiten außerhalb der Presse ohne Behinderung durch das Druckkissen und ohne Blockierung etwaiger anderweitiger Arbeitsvorgänge durchgeführt werden können.

Auf der Platte 232 ist ein plattenförmiges Pult 236 lösbar befestigt. Das Pult 236 weist beispielsweise eine Höhe von 10 bis 20 mm, vorzugsweise von mindestens 14 mm auf. Das Pult 246 dient als Aufnahme für einen zu beschichtenden Gegenstand, beispielsweise eine rechteckige Türplatte 238 mit abgerundeten Ecken und Kanten, wie sie Fig. 5 angedeutet ist.

Unterhalb des Druckkissens 210 ist ein Rahmen 240 aufgehängt, der die Türplatte 238 auf deren gesamtem Umfang mit auf allen Seiten gleicher Breite umgibt und bei einer rechteckigen Türplatte ebenfalls die Form eines Rechtecks aufweist. Der Rahmen 240 ist an der Außenseite des Dichtrahmens 222 mit Hilfe von senkrechten Schäften 242, Federn 244 und an dem Dichtrahmen 222 angebrachten Ansätzen 246 federnd aufgehängt.

Unterhalb des Rahmens 240 befindet sich ein im wesentlichen deckungsgleicher, auf der Platte 232 befestigter oder einstückig mit dieser ausgebildeter Unterrahmen 248. Auch dieser Unterrahmen 248 umgibt die Türplatte 238 bzw. das Pult 236 auf dem gesamten Umfang mit gleichbleibendem Seitenabstand.

Beim Beschichten einer Türplatte 238 mit einer Kunststofffolie wird zunächst bei geöffneter Presse eine Kunststofffolie 250 auf die Türplatte 238 und den Unterrahmen 248 aufgelegt, wie es in Fig. 5 gezeigt ist. Wird nun das Druckkissen abgesenkt, so trifft zunächst der obere Rahmen 240 auf den Unterrahmen 248. Dabei wird die Kunststoffolie 250 zwischen den beiden Rahmen eingespannt. Eine in den Unterrahmen 248 eingelassene Dichtleiste verstärkt dabei die Klemmwirkung. Die Rahmen 240,248 können auf den einander zugewandten Flächen auch eine Riffelung oder dergleichen aufweisen, die die Klemmwirkung erhöht. Nachdem die Rahmen 240,248 die Kunststoffolie 250 auf die beschriebene Weise eingespannt haben, drückt sich beim weiteren Absenken des Druckkissens die Feder 244 zusammen. Der Dichtrahmen 222 legt sich auf die obere Oberfläche des Rahmens 240. Die Membran 214 legt sich im gesamten Innenbereich des Rahmens 240 auf die Kunststoffolie 250, wie es in Fig. 6 gezeigt ist, und erwärmt die Kunststoffolie. Der Rahmen 240 weist waagerechte Bohrungen 254 auf, durch die die zwischen der Kunststoffolie 250 und der Membran 214 gefangene Luft nach außen entweichen kann, da einzelne Lufttaschen die Übertragung von Wärme und Druck durch die Membran beeinträchtigen würden.

Nunmehr wird der Druck innerhalb des Druckkissens nach und nach bis auf etwa 5 bar gesteiert. Dabei legt sich die Membran 218 glatt gegen die obere Oberfläche der Türplatte 238 an, und sie wird im übrigen vollständig in die Vertiefung zwischen den beiden Rahmen 240,248 einerseits und dem Pult 236 mit der Türplatte 238 andererseits hineingedrückt, bis sie gegen die Oberfläche der Platte 232 aliegt. Da die Kunststoffolie 250 durch die Membran 214 von oben und die Heizplatte 230 bzw. die Platte 232 von unten erwärmt worden ist, kann sie dieser Dehnungsbewegung folgen. Sie legt sich dabei vollständig glatt gegen die äußeren Ränder 256 der Türplatte 238 an. Da das Pult 236 die Türplatte 238 in einer bestimmten Mindesthöhe über der Platte 232 hält und im übrigen in seinem Umriß um einige Millimeter gegenüber der Türplatte 238 zurückgesetzt ist, kann die Kunststoffolie 250 bis zur unteren, umlaufenden Kante der Türplatte 238 zuverlässig und faltenfrei an den Rändern 256 verklebt werden. An den vier Ecken eines rechteckigen Körpers, wie etwa einer Türplatte, oder an entsprechenden Vorsprüngen anderer Körper, sollte die Kunststoffolie stärker als an den glatten Rändern 256 gedehnt werden. Dies läßt sich beispielsweise erreichen durch Verwendung rechteckiger Rahmen 240,248 in Verbindung mit einer rechteckigen Türplatte 238, da in diesem Falle bei gleichbleibenden Seitenabständen zwischen der Tür platte und den Rahmen in den Ecken der Türplatte wegen des größeren Diagonalmaßes eine besonders starke Verformung stattfindet. Durch diese Verformung wird erreicht, daß sich die Kunststoffolie ohne Faltenbildung anlegt.

Gemäß Fig. 5 und 6 weist auch der Unterrahmen 248 waagerechte Bohrungen 258 auf. Diese Bohrungen 258 gestatten ebenfalls einen Luftaustritt beim Absenken der Membran 214 mit der Kunststoffolie 250 in die Vertiefung zwischen den Rahmen 240,248 und der Türplatte 238.

Wenn der Beschichtungsvorgang beendet ist, wird das Druckkissen 210 wieder angehoben. Dabei kann der Fall eintreten, daß die verhältnismäßig heiße Membran 214 an der Kunststoffolie 250 anhaftet und diese zumindest teilweise nach oben mitnimmt, so daß die Kunststoffolie wiederum von der Türplatte 238 gelöst oder zumindest teilweise zerstört wird. Dies läßt sich dadurch verhindern, daß die Bohrungen 254 im oberen Rahmen 240 beim Anheben des Druckkissens 210 zum Einblasen von Kühlluft benutzt werden. Durch Kühlluft wird einerseits die Kunststoffolie gekühlt und in ihrer Haftfähigkeit verringert, und zum anderen werden die Membran 214 und die Kunststoffolie 250 auseinandergedrückt.

Im oberen Rahmen können in nicht gezeigter Weise entweder gesonderte Bohrungen 254 für die Entlüftung einerseits und das Einblasen von Kühlluft andererseits vorgesehen sein. Die Bohrungen 254 können jedoch auch zu einem Kanalsystem zusammmgenfaßt sein, das mit Hilfe geeigneter Umschaltventile während der Entlüftung mit der Umgebung und in der Kühlphase mit einer geeigenten Kühlgasquelle verbunden wird.

Die Bohrungen in dem Unterrahmen 248, die eine Entlüftung des Zwischenraumes zwischen den Rahmen 240,248 und der Türplatte 238 bzw. dem Pult 236 ermöglichen, können ebenfalls zu einem nicht gezeigten Kanalsystem verbunden sein, das über geeignete Ventile mit einer Unterdruckquelle in Verbindung gesetzt werden kann. Dadurch ergibt sich die Möglichkeit, die Entlüftung des erwähnten Zwischenraumes zu beschleunigen oder darüber hinaus ein mehr oder weniger starkes Vakuum in dem Zwischenraum zu erzeugen, durch das die Folie nach unten gezogen wird.

Sofern der zu beschichtende Körper luftdurchlässig ist, wie es beispielsweise bei Spanplatten oder Stauplatten aus Holzmaterialien zumeist der Fall ist, kann auch an die Rückseite des Körpers ein Unterdruck angelegt werden, der die Folie fest in die Poren der Sichtseite hineinzieht. Zu diesem Zweck ist in dem Pult 236 ein Kanal 260 angedeutet, der den Zwischenraum zwischen den Rahmen 240,248 und dem Pult 236 mit der Rückseite der Türplatte 238 verbindet. Der in dem Zwischenraum gebildete Unterdruck setzt sich daher bis zur Rückseite der Türplatte fort.

Das Pult 236 kann aus Einzelteilen zusammengesetzt sein, so daß die Möglichkeit besteht, jeweils entsprechend der Größe des zu beschichtenden Körpers zusammenzusetzen. Zu diesem Zweck sind lediglich angedeutete Schienen 262 vorgesehen, die als Halterung für die zusammengesetzten Teile des Pultes dienen und unter Umständen auch eine Verschiebung des Pultes gestatten.

Mit dem erfindungsgemäßen Verfahren und der erfindungsgemäßen Vorrichtung können nicht nur Kunststoffolien aufgebracht werden, sondern auch andere, folienförmige Materialien, Leder, Furnier, Filz etc..

Bei der in Fig. 5 und 6 gezeigten Ausführungsform können im oberen und unteren Rahmen Thermofühler vorgesehen sein, die eine relativ genaue Messung und Steuerung der Temperatur der Folie ermöglichen.

**Ansprüche**

1. Verfahren zur Kunststoffbeschichtung von dreidimensionalen Körpern, bei dem eine Kunststoffolie auf einen Körper aufgelegt und unter Erwärmung mit Hilfe eines Druckkissens angedrückt wird, dadurch **gekennzeichnet**, daß die Folie (28) durch einen den Körper (20) mit Abstand umgebenden Rahmen (22) eingespannt wird und daß die Folie durch den Rahmen beim Andrücken mit dem Druckkissen gehalten wird.

2. Vorrichtung zur Durchführung des Verfahrens gemäß Anspruch 1, mit einem Tisch zur Aufnahme eines zu beschichtenden Körpers und einem absenkbaren Druckkissen zum Andrücken einer Kunststoffolie an den Körper, **gekennzeichnet** durch einen dem Umriß des Körpers (20) mit Abstand folgenden, absenkbaren Rahmen (22) zum Einspannen der Kunststoffolie (28).

3. Vorrichtung nach Anspruch 2, dadurch **gekennzeichnet**, daß der Rahmen (22) mit Abstand unterhalb des Druckkissens (16) aufgehängt und entgegen der Wirkung von Federn (34,36) gegen dieses anhebbar ist.

4. Vorrichtung nach Anspruch 2 oder 3, zur Beschichtung von rechteckigen plattenförmigen Körpern, dadurch **gekennzeichnet**, daß der Rahmen (22) rechteckig ist und gleichbleibenden Abstand gegenüber den Rändern des zu beschichtenden Körpers (20) aufweist.

5. Vorrichtung zur Kunststoffbeschichtung von dreidimensionalen Körpern, mit einem Tisch zur Aufnahme eines zu beschichtenden Körpers und einem absenkbaren Druckkissen zum Andrücken einer Kunststoffolie an einen Körper, insbesondere nach einem der Ansprüche 1 bis 4, **gekennzeichnet** durch einen auf die Folie (128) auflegbaren und diese gegen den Tisch (110) andrückenden Rahmen (122).

6. Vorrichtung nach Anspruch 5, dadurch **gekennzeichnet**, daß der Rahmen (122) ein dem Tisch (110) zugeordnetes unteres Rahmenteil (126) und ein anhebbares und absenkbares, auf die Folie (128) auflegbares oberes Rahmenteil (124) umfaßt.

7. Vorrichtung nach Anspruch 6, dadurch **gekennzeichnet**, daß das untere Rahmenteil (126) integraler Bestandteil des Tisches (110) ist.

8. Vorrichtung nach Anspruch 6 oder 7, dadurch **gekennzeichnet**, daß sich der Rahmen (122) im Wirkbereich des Druckkissens befindet.

9. Vorrichtung nach einem der Ansprüche 5 bis 7, dadurch **gekennzeichnet**, daß der Tisch (110) ein gegenüber der Tischfläche erhabenes Pult (118) zur Aufnahme des Körpers (120) aufweist, dessen Umriß kleiner als derjenige des Körpers ist.

10. Vorrichtung nach einem der vorhergehenden Ansprüche zur gleichzeitigen Beschichtung einer Anzahl von dreidimensionalen Körpern, dadurch **gekennzeichnet**, daß der Rahmen (138) rasterförmig entsprechend der Anordnung der Körper (120) auf dem Tisch (110) ausgebildet ist.

11. Vorrichtung nach einem der Ansprüche 5 bis 10, **gekennzeichnet** durch eine Absaugvorrichtung (132,134,136) zum Absaugen von Gasen von der Rückseite des Körpers (120).

12. Vorrichtung nach Anspruch 11, dadurch **gekennzeichnet**, daß die Absaugvorrichtung Saugleitungen (134,136) umfaßt, die durch Bohrungen in der Rückseite des Körpers (120) in diesen eintreten.

13. Vorrichtung nach einem der vorhergehenden Ansprüche, dadurch **gekennzeichnet**, daß in dem Rahmen (122) bzw. dem oberen und/oder unteren Rahmenteil (124, 126) quergerichtete Bohrungen (140) oder Nuten (142) zur Entlüftung vorgesehen sind.

14. Vorrichtung zur Kunststoffbeschichtung von dreidimensionalen Körpern, mit einem Tisch zur Aufnahme eines zu beschichtenden Körpers und einem absenkbaren Druckkissen zum Andrücken der Kunststoffolie an den Körper, insbesondere nach einem der Ansprüche 1 bis 13, **gekennzeichnet** durch einen den Körper umgebenden und dessen Umriß mit Abstanden folgenden, auf die Kunststoffolie (250) auflegbaren und diese gegen den Tisch (212,232) andrückenden Rahmen, in dem Bohrungen zur Entlüftung des Rahmeninneren und/oder zur Luftzufuhr in das Rahmeninnere vorgesehen sind.

15. Vorrichtung nach Anspruch 14, dadurch **gekennzeichnet**, daß die äußeren Enden der Bohrungen (254) mit einer Druckluftquelle verbunden sind.

16. Vorrichtung nach Anspruch 14 oder 15, dadurch **gekennzeichnet**, daß die äußeren Enden der Bohrungen mit einer Kühlgasquelle verbunden sind.

17. Vorrichtung nach einem der Ansprüche 14 bis 16, dadurch **gekennzeichnet**, daß die Bohrungen (254) in dem Rahmen(240) in ein Kanalsystem integriert sind, das wahlweise die Entlüftung des Rahmeninneren und die Einleitung von Druck- und/oder Kühlgas gestattet.

18. Vorrichtung nach einem der vorhergehenden Ansprüche, dadurch **gekennzeichnet**, daß der Rahmen (240) federnd unterhalb des Druckkissens (210) aufgehängt ist.

19. Vorrichtung nach einem der vorhergehenden Ansprüche, dadurch **gekennzeichnet**, daß auf dem Tisch (212,232) ein Pult (236) zur Aufnahme eines zu beschichtenden Körpers (238) vorgesehen ist.

20. Vorrichtung nach einem der vorhergehenden Ansprüche, **gekennzeichnet** durch einen auf dem Tisch (212,232) angebrachten, mit dem Rahmen (240) im wesentlichen deckungsgleichen Unterrahmen (248).

21. Vorrichtung nach Anspruch 20, dadurch **gekennzeichnet**, daß der Unterrahmen (248) durchgehende Bohrungen (258) zur Entlüftung des Zwischenraumes zwischen dem Unterrahmen (248) und dem Pult (236) beim Andrücken der Kunststoffolie (250) aufweist.

22. Vorrichtung nach Anspruch 21, dadurch **gekennzeichnet**, daß die Bohrungen (258) mit einer Unterdruckquelle verbunden sind.

23. Vorrichtung nach einem der Ansprüche 19 bis 22, dadurch **gekennzeichnet**, daß das Pult (236) und/oder der Unterrahmen (248) auf einer auf den Tisch (212) aufgelegten Platte (232) angeordnet sind, die lösbar und von dem Tisch abnehmbar ist.

24. Vorrichtung nach einem der vorhergehenden Ansprüche, dadurch **gekennzeichnet**, daß der Tisch (212) im oberen Bereich als Heizplatte ausgebildet ist.

# Fig.1

# Fig.2

EP 87 202 005.2
Diekwisch

# Fig. 3

# Fig. 4

# Fig.5

0 262 748

# Fig. 6

BAD ORIGINAL

EP 87 202 005.2
Diekwisch